# EUROPÄISCHE PATENTANMELDUNG

(11) **EP 1 313 316 A2**
(43) Veröffentlichungstag der Anmeldung: **21.05.2003**
(21) Anmeldenummer: 02022844.1
(22) Anmeldetag: 14.10.2002
(51) Int. Cl.: H04N 7/088, H04N 5/445

(54) **Vorrichtung zum Empfang von Fernsehsignalen**

(30) Priorität: 15.10.2001 DE 10150843
(71) Anmelder: Grundig AG, 90471 Nürnberg (DE)
(72) Erfinder: Schramm, Günter, 91589 Aurach (DE)

(57) **Zusammenfassung**

Die Erfindung betrifft eine Vorrichtung zum Empfang von Fernsehsignalen. Diese weist zwei Empfangszüge und einen die Empfangszüge steuernden Mikrocontroller auf. Der Mikrocontroller aktiviert in einer Betriebsart, in der nur einer der Empfangszüge zum Empfang von Fernsehsignalen benötigt wird, den anderen Empfangszug automatisch, um Programmvorschausignale aus einem übertragenen Fernsehsignal abzuleiten.

## Beschreibung

Die Erfindung betrifft eine Vorrichtung zum Empfang von Fernsehsignalen.

Es sind bereits Fernsehsender bekannt, die in den vertikalen Austastlücken eines analogen Fernsehsignals digitale Programmvorschausignale für den eigenen Sender und auch für andere Sender übertragen. Zu diesen sogenannten TV Guide-Anbietern gehören beispielsweise die Fernsehsender PR07, RTL2, 3SAT und CANAL+.

Weiterhin sind bereits Fernsehempfangsgeräte bekannt, die nach einem Ausschalten des Gerätes für eine vorgegebene Zeitdauer in einem Pseudo-Standby-Modus gehalten werden und in diesem Pseudo-Standby-Modus die oben genannten Programmvorschausignale abrufen und in einem nichtflüchtigen Speicher des Gerätes ablegen. Dabei wird bei Bedarf automatisch auf den die Programmvorschausignale übertragenden Fernsehsender umgeschaltet.

Ferner ist es bereits bekannt, als Teil eines Bitstromes, welcher digitale Fernsehsignale enthält, Eventinformationen zu übertragen. Diese Eventinformationen können ebenfalls digitale Programmvorschausignale enthalten. Die genannten Eventinformationen oder gewünschte Teile davon können in einem Fernsehempfangsgerät aus dem übertragenen Bitstrom abgetrennt und in einem Speicher des Gerätes abgelegt werden.

Weiterhin sind bereits Vorrichtungen zum Empfang von Fernsehsignalen bekannt, die zwei Empfangszüge und einen diese Empfangszüge steuernden Mikroprozessor aufweisen.

Die Aufgabe der Erfindung besteht darin, eine Vorrichtung zum Empfang von Fernsehsignalen anzugeben, bei welcher die empfangsseitige Verarbeitung von übertragenen Programmvorschausignalen verbessert ist.

Diese Aufgabe wird durch eine Vorrichtung mit den im Anspruch 1 angegebenen Merkmalen gelöst. Vorteilhafte Ausgestaltungen und Weiterbildungen der Erfindung sind in den abhängigen Ansprüchen angegeben.

Die Vorteile der Erfindung bestehen insbesondere darin, dass ein ohnehin vorhandener, momentan aber nicht benötigter zweiter Empfangszug einer Fernsehsignalempfangsvorrichtung automatisch im Hintergrund Programmvorschausignale aus übertragenen Fernsehsignalen ableitet und in einem empfängerseitigen Speicher hinterlegt. Dadurch ist es in vielen Fällen nicht mehr notwendig, das Gerät nach einem Ausschalten für einen längeren Zeitraum in einem Pseudo-Standby-Modus zu halten. Dies verringert den Stromverbrauch des Gerätes.

Weiterhin wird durch die Erfindung erreicht, dass zu einer Aktualisierung empfangsseitig abgespeicherter Programmvorschauinformationen nicht erst abgewartet werden muss, bis das Empfangsgerät ausgeschaltet wird. Dadurch ist die Aktualität der abgespeicherten Programmvorschausignale erhöht. Dies ist insbesondere dann von Bedeutung, wenn der Benutzer zu einer momentan laufenden Sendung oder zu einer in Kürze beginnenden Sendung Informationen benötigt, die in den genannten Programmvorschausignalen enthalten sind.

Stammen die empfangsseitig abgespeicherten Programmvorschausignale aus verschiedenen Quellen und betreffen dennoch ein und dasselbe Fernsehprogramm, dann können die aus den verschiedenen Quellen abgeleiteten Informationen empfangsseitig zusammengeführt und bei Bedarf gemeinsam auf einem Bildschirm angezeigt werden. Dadurch erhält der Benutzer mehr Informationen über einen gewünschten Sendebeitrag als er sie beim Empfang von Informationen aus nur einer Quelle zur Verfügung hätte.

Dieser Vorteil wird insbesondere dann erreicht, wenn empfangsseitig neben einem ersten Empfangszug für analoge Fernsehsignale ein zweiter Empfangszug für digitale Fernsehsignale zur Verfügung steht. Die Übertragungskapazität für Programmvorschausignale in den Austastlücken eines analogen Fernsehsignals ist begrenzt. Aus diesem Grunde werden dort nur wenige zu einer Sendung gehörige Daten übertragen, beispielsweise Angaben über die Sendezeit und den Titel der Sendung. Diese Daten können in vorteilhafter Weise in der Empfangsvorrichtung durch Daten ergänzt werden, die als Bestandteil des Service-Kanals einer digitalen Fernsehsignalübertragung übertragen werden. Dort steht mehr Übertragungskapazität zur Verfügung, so dass durch ein automatisches Zusammenführen von Programmvorschausignalen, die aus den Austastlücken eines analogen Fernsehsignals abgeleitet sind, und von Programmvorschausignalen, die in einem digitalen Datenstrom im Service-Kanal enthalten sind, empfangsseitig umfassende Informationen zu einer gewünschten Fernsehsendung zusammengestellt werden können.

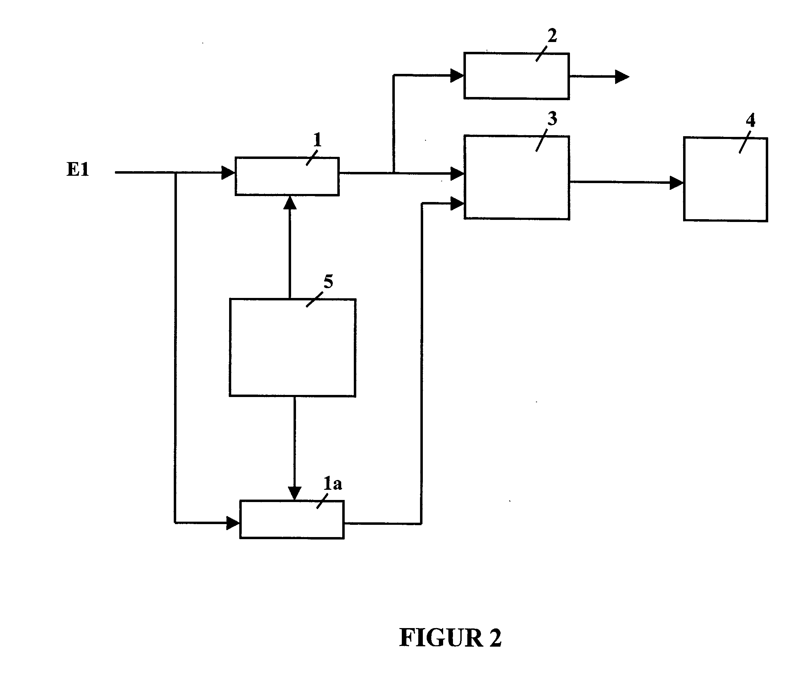

In einer vorteilhaften Ausgestaltung der Erfindung stehen die im Analogen in den Austastlücken abgestrahlten Informationen in derselben Form im Digitalen ebenfalls zur Verfügung und können parallel genutzt werden (entspricht Fig. 2) => 2 digitale Empfangszüge sind ebenfalls sinnvoll.

Werden die in den Austastlücken eines analogen Fernsehsignals übertragenen Programmvorschausignale, die dort in einem Fernsehtextsignalen entsprechenden ersten Datenformat übertragen werden, mit den in einem digitalen Datenstrom im Service-Kanal übertragenen Programmvorschausignalen, die dort in einem zweiten Datenformat übertragen werden, zusammengeführt, dann erfolgt dies vorzugsweise über einen Datenformatwandler. Dies hat den Vorteil, dass die aus unterschiedlichen Quellen abgeleiteten Programmvorschausignale in ein und demselben Speicher abgespeichert und bei Bedarf von dort abgerufen werden können.

Weitere vorteilhafte Eigenschaften der Erfindung ergeben sich aus der nachfolgenden Erläuterung der Erfindung anhand der in den Figuren gezeigten Ausführungsbeispiele. Es zeigt:
- Figur 1: ein Blockschaltbild einer Vorrichtung gemäß einem ersten Ausführungsbeispiel für die Erfindung,
- Figur 2: ein Blockschaltbild einer Vorrichtung gemäß einem zweiten Ausführungsbeispiel für die Erfindung und
- Figur 3: ein Blockschaltbild einer Vorrichtung gemäß einem dritten Ausführungsbeispiel für die Erfindung.

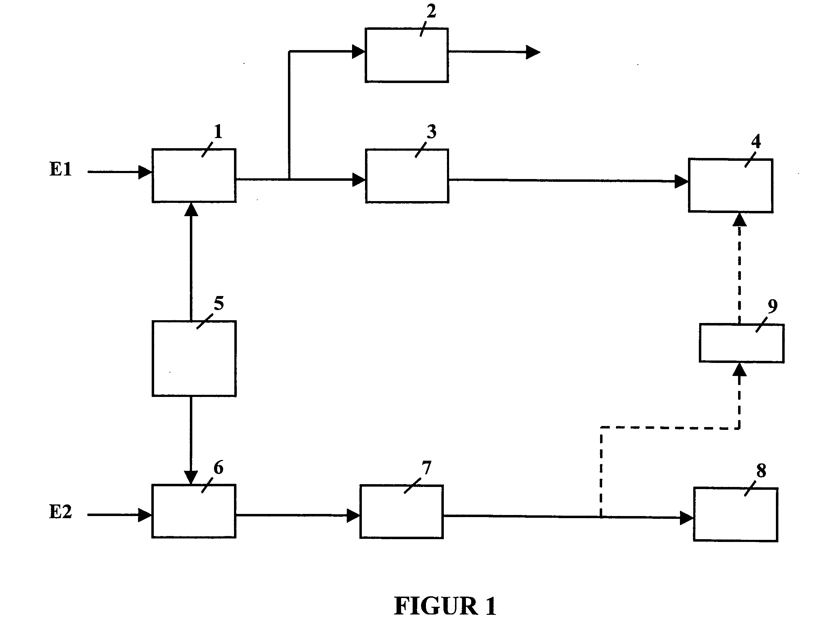

Die Figur 1 zeigt ein Blockschaltbild einer Vorrichtung gemäß einem ersten Ausführungsbeispiel für die Erfindung. Die dargestellte Vorrichtung weist einen ersten Eingang E1 auf, an welchem ein von einer terrestrischen Empfangsantenne, einer Kabelübertragungsstrecke oder einer Satellitenantenne abgeleitetes HF-Signal anliegt.

Aus diesem wird in einer ersten Empfangsstufe 1, die einen Tuner und einen Zwischenfrequenzteil aufweist, ein gewünschtes analoges Fernsehsignal separiert und am Ausgang der Empfangsstufe als FBAS-Signal zur Verfügung gestellt. Dieses wird über eine Bildsignalverarbeitungseinheit 2, an deren Ausgang RGB-Signale anstehen, einer nicht gezeichneten Anzeigeeinheit zugeführt.

Das Ausgangssignal der Empfangsstufe 1 wird weiterhin einem Programmvorschausignalseparator 3 zugeleitet. Dieser demoduliert und decodiert in den Ausgangslücken des Fernsehsignals übertragene Programmvorschausignale und leitet diese an einen nichtflüchtigen Speicher 4 weiter, in welchem sie abgespeichert werden.

Die genannten Programmvorschausignale werden nur von bestimmten Fernsehsendern übertragen, beispielsweise von PRO7. Sie werden vom genannten Sender in den Teletextdatenstrom eingefügt, welcher in vorgegebenen Zeilen der Vertikalaustastlücke übertragen wird. Die Übertragung der Programmvorschausignale erfolgt dort in vom Benutzer nicht einzeln anwählbaren Teletextseiten. Die übertragenen Programmvorschausignale enthalten Programminformationen über eine Vielzahl von verschiedenen Fernsehsendern. Eine Abspeicherung dieser Programmvorschausignale im Speicher 4 erfolgt automatisch immer dann, wenn der entsprechende Sender angewählt ist und gegebenenfalls auch nach Eingabe eines entsprechenden Bedienbefehls durch den Benutzer. Da die Übertragungskapazität in der vertikalen Austastlücke des Fernsehsignals gering ist, nimmt die Übertragung eines kompletten Satzes von Programmvorschausignalen, die eine Vielzahl von Fernsehsendern betreffen, einen langen Zeitraum in Anspruch. Ist der die Programmvorschauseiten ausstrahlende Sender nicht angewählt, dann erfolgt während des Gerätebetriebes auch keine Abspeicherung von Programmvorschausignalen, die in den Austastlücken des mittels der Empfangsstufe empfangenen Fernsehsignals übertragen werden.

Um auch in Betriebsarten, in denen der die Pogrammvorschausignale ausstrahlende Sender nicht aktiviert ist, Programmvorschausignale abspeichern zu können, weist die gezeigte Vorrichtung einen zweiten Empfangszug auf, welcher eine zweite Empfangsstufe 6 enthält. Dieser wird ein an einem zweiten Eingang E2 anliegendes HF-Fernsehsignal zugeführt, welches digitale Fernsehsignale enthält. Diese werden kanalweise in Form von Datenströmen übertragen. Ein Datenstrom enthält im Zeitmultiplex Datenpakete, die verschiedenen Fernsehprogrammen zugehörig sind, und auch Datenpakete, die Eventinformationen entsprechen. In den Datenpaketen, die Eventinformationen aufweisen, sind auch Programmvorschausignale enthalten.

Mittels der Empfangsstufe 6 wird ein gewünschter Kanal angewählt und der dort übertragene Datenstrom separiert. Aus diesem separierten Datenstrom werden in einem Programmvorschausignalseparator 7 gewünschte Programmvorschausignale separiert und im Speicher 8 abgespeichert. Zu diesem Zweck enthält der Programmvorschausignalseparator 7 ein erstes Filter, welches aus dem am Ausgang der Empfangsstufe 6 vorliegenden Datenstrom alle im übertragenen Signal enthaltenen Eventinformationen separiert. Aus diesen werden dann in einem zweiten Filter gewünschte Programmvorschausignale abgetrennt und im Speicher 8 abgespeichert. Das zweite Filter ist vom Benutzer mittels der Bedieneinheit steuerbar. Beispielsweise kann der Benutzer nur Programmvorschausignale, die einen einzigen Sender betreffen, oder Programmvorschausignale, die eine einzige Programmsparte betreffen, oder Programmvorschausignale, die ein gewünschtes Zeitintervall betreffen, separieren.

Eine alternative Möglichkeit besteht darin, die am Ausgang des Programmvorschausignalseparators 7 in digitaler Form vorliegenden Programmvorschausignale einem Datenformatwandler 9 zuzuführen. In diesem werden die Programmvorschausignale in ein Datenformat umgewandelt, welches dem Datenformat der mittels des Programmvorschausignalseparators 3 gewonnenen Programmvorschausignale entspricht. Die am Ausgang des Datenformatwandlers 9 vorliegenden Signale werden im Speicher 4 abgespeichert und können aus diesem bei Bedarf ausgelesen und auf der Anzeigeeinheit des Empfangsgerätes dargestellt werden.

Bei der in der Figur 1 dargestellten Vorrichtung handelt es sich um ein Fernsehempfangsgerät, dessen Gehäuse beide in der Figur 1 gezeigten Empfangszüge enthält. Dieses Fernsehempfangsgerät weist verschiedene Betriebsarten auf. Bei einigen dieser Betriebsarten werden beide Empfangsteile benötigt, beispielsweise bei einer Bild-im-Bild-Darstellung oder dann, wenn das mittels der Empfangsstufe 1 empfangene Signal auf dem Bildschirm wiedergegeben werden soll und gleichzeitig ein mittels der Empfangsstufe 6 empfangenes Signal mittels eines nicht gezeichneten Videorecorders aufgezeichnet werden soll.

Es gibt aber auch Betriebsarten, bei denen nur einer der Empfangszüge zum Empfang von Fernsehsignalen benötigt wird. Beispielsweise sollen im Sinne einer herkömmlichen Fernsehsignalwiedergabe die von der Empfangsstufe 1 abgeleiteten Signale auf dem Display angezeigt werden, wobei die Empfangsstufe 6 nicht benötigt wird. In allen diesen Betriebsarten steuert der Mikrocontroller 5 die jeweils nicht benötigte Eingangsstufe derart an, dass sie auf einen Kanal abgestimmt wird, in welchem Programmvorschausignale übertragen werden. Diese werden dann im Hintergrund, also für den Fernsehzuschauer nicht sichtbar, aus den im jeweiligen Kanal übertragenen Signalen auf die oben beschriebene Weise abgetrennt und im Speicher 8 bzw. 4 abgelegt. Da diese Abspeicherung während des laufenden Gerätebetriebes erfolgt, braucht nach einem Abschalten des Gerätes dieses nicht in einem Pseudo-Standby-Modus zu verbleiben.

Kann bei nur kurzer Einschaltdauer des Gerätes im Hintergrund nicht ein kompletter Satz von Porgrammvorschausignalen abgespeichert werden, dann kann gegebenenfalls das Gerät nach dem Ausschalten noch für eine kurze Zeit im Pseudo-Standby-Modus verbleiben, um die Abspeicherung zu vervollständigen. Auch in diesen Fällen wird durch die Verkürzung der Pseudo-Standby-Zeit der Energieverbrauch des Gerätes verringert.

Eine besondere Ausführungsform der Erfindung besteht darin, dass zur Ableitung von Programmvorschausignalen, die in den Austastlücken von analogen Fernsehsignalen übertragen werden, und zur Ableitung von Programmvorschausignalen, die in Paketform im Zeitmultiplex mit digitalen Fernsehsignalen übertragen werden, auf eine gemeinsame Datenbasis zurückgegriffen wird. Bei dieser Ausführungsform kann senderseitig die Programmvorschauinformation so gestaltet werden, dass sie sich optimal ergänzt.

Die Figur 2 zeigt ein Blockschaltbild einer Vorrichtung gemäß einem zweiten Ausführungsbeispiel für die Erfindung. Dieses Ausführungsbeispiel unterscheidet sich von dem in der Figur 1 gezeigten Ausführungsbeispiel dadurch, dass mittels der zweiten Empfangsstufe 1a ebenfalls analoge Fernsehsignale empfangen werden.

Wird bei dem in der Figur 2 gezeigten Ausführungsbeispiel mittels der Empfangsstufe 1 ein gewünschtes analoges Fernsehsignal empfangen und über die Bildverarbeitungseinheit 2 dem Bildschirm zugeführt, dann kann im Sinne der vorliegenden Erfindung das momentan nicht zum Empfang von Fernsehsignalen benötigte zweite Empfangsteil 1a zur Separation von Programmvorschausignalen verwendet werden.

Zu diesem Zweck schaltet der Mikrocontroller 5 die zweite Empfangsstufe 1a automatisch auf denjenigen Fernsehkanal um, in welchem die Programmvorschausignale übertragen werden. Die Ausgangssignale der zweiten Empfangsstufe 1a werden dem Programmvorschausignalseparator 3 zugeführt. Dieser separiert die in den Vertikalaustastlücken des Fernsehsignals übertragenen Programmvorschausignale und leitet diese an den Speicher 4 weiter, wo sie nichtflüchtig abgespeichert werden.

In der Figur 2 ist ein für beide Empfangszüge gemeinsamer Programmvorschausignalseparator 3 vorgesehen. Gemäß einer alternativen Ausführungsform kann selbstverständlich auch jeder Empfangszug einen eigenen Programmvorschausignalseparator aufweisen.

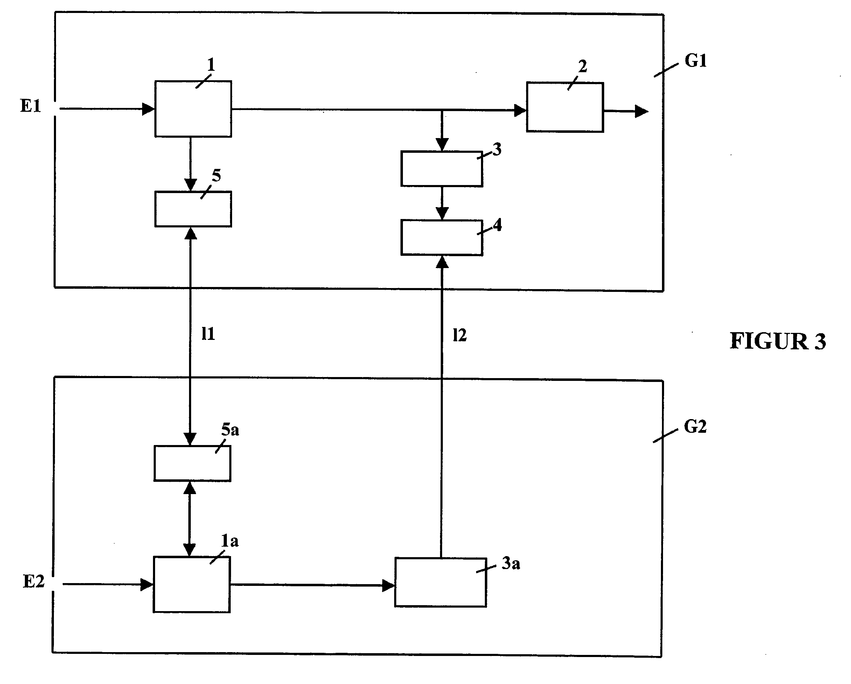

Die Figur 3 zeigt ein Blockschaltbild einer Vorrichtung gemäß einem dritten Ausführungsbeispiel für die Erfindung. Dieses Ausführungsbeispiel unterscheidet sich von den in den Figuren 1 und 2 gezeigten Ausführungsbeispielen insbesondere dadurch, dass die beiden Empfangszüge in verschiedenen Geräten der Empfangsvorrichtung angeordnet sind. Eines der Geräte kann beispielsweise ein Fernsehgerät und das andere Gerät ein Videorecorder sein. Alternativ dazu kann auch eines der Geräte eine Settop-Box und das andere ein Fernsehgerät sein.

Bei diesem Ausführungsbeispiel stehen der Mikrocontroller 5 des Gerätes G1 und der Mikrocontroller 5a des Gerätes G2 über eine Leitung 11 miteinander in Verbindung.

Wird bei dem in der Figur 3 gezeigten Ausführungsbeispiel mittels der Empfangsstufe 1 ein gewünschtes Fernsehsignal empfangen und über die Bildverarbeitungseinheit 2 dem Bildschirm zugeführt, dann kann im Sinne der vorliegenden Erfindung das momentan nicht zum Empfang von Fernsehsignalen benötigte zweite Empfangsteil 1a zur Separation von Programmvorschausignalen verwendet werden.

Zu diesem Zweck schaltet der Mikrocontroller 5 über den Mikrocontroller 5a die zweite Empfangsstufe 1a automatisch auf denjenigen Fernsehkanal um, in welchem die Programmvorschausignale übertragen werden. Die Ausgangssignale der zweiten Empfangsstufe 1a werden dem Programmvorschausignalseparator 3a zugeführt. Dieser separiert die Programmvorschausignale und leitet diese über die Signalleitung 12 an den im Gerät G1 angeordneten Speicher 4 weiter, wo sie nichtflüchtig abgespeichert werden.

## Patentansprüche

1. Vorrichtung zum Empfang von Fernsehsignalen, mit zwei Empfangszügen und einem die Empfangszüge steuernden Mikrocontroller,
**dadurch gekennzeichnet, dass**
der Mikrocontroller (5) in einer Betriebsart, in der nur einer der Empfangszüge zum Empfang von Fernsehsignalen benötigt wird, den anderen Empfangszug automatisch aktiviert, um Programmvorschausignale aus einem übertragenen Fernsehsignal oder einem übertragenen digitalen Fernsehsignal-Datenstrom abzuleiten.

2. Vorrichtung nach Anspruch 1,
**dadurch gekennzeichnet, dass**
die beiden Empfangszüge Bestandteile eines einzigen Fernsehempfangsgerätes sind.

3. Vorrichtung nach Anspruch 1,
**dadurch gekennzeichnet, dass**
die beiden Empfangszüge verschiedenen Fernsehempfangsgeräten angehören.

4. Vorrichtung nach einem der vorhergehenden Ansprüche,
**dadurch gekennzeichnet, dass**
einer der Empfangszüge zum Empfang analoger Fernsehsignale und der andere Empfangszug zum Empfang digitaler Fernsehsignale vorgesehen ist.

5. Vorrichtung nach einem der vorhergehenden Ansprüche,
**dadurch gekennzeichnet, dass**
die beiden Empfangszüge jeweils einen eigenen Speicher aufweisen, der zur Abspeicherung von Programmvorschausignalen vorgesehen ist.

6. Vorrichtung nach einem der Ansprüche 1 - 4,
**dadurch gekennzeichnet, dass**
die beiden Empfangszüge an einen gemeinsamen Speicher angeschlossen sind, welcher zur Abspeicherung von Programmvorschausignalen vorgesehen ist.

7. Vorrichtung nach Anspruch 6,
**dadurch gekennzeichnet, dass**
einer der Empfangszüge mit dem gemeinsamen Speicher über einen Datenformatwandler (9) verbunden ist.

8. Vorrichtung nach einem der vorhergehenden Ansprüche,
**dadurch gekennzeichnet, dass**
einer der Empfangszüge zum Empfang von analogen Fernsehsignalen vorgesehen ist und eine Empfangsstufe (1) und einen Programmvorschausignalseparator (3) aufweist, wobei der Programmvorschausignalseparator (3) einen Demodulator und einen Programmvorschausignaldecoder aufweist.

9. Vorrichtung nach einem der vorhergehenden Ansprüche,
**dadurch gekennzeichnet, dass**
einer der Empfangszüge zum Empfang digitaler Fernsehsignale vorgesehen ist und eine Empfangsstufe (6), ein erstes Filter zur Separation gewünschter Datenpakete, welche übertragene Eventinformationen enthalten, und ein zweites Filter zur Separation gewünschter Programmvorschausignale aus den separierten Datenpaketen aufweist.

10. Vorrichtung nach Anspruch 9,
**dadurch gekennzeichnet, dass**
sie eine Bedieneinheit aufweist, mittels derer gewünschte Programmvorschausignale auswählbar sind.
